Europäisches Patentamt

European Patent Office

Office européen des brevets

(11) Numéro de publication : **0 346 990 B1**

# (12) FASCICULE DE BREVET EUROPEEN

(45) Date de publication du fascicule du brevet :
20.05.92 Bulletin 92/21

(51) Int. Cl.⁵ : **C02F 3/08**

(21) Numéro de dépôt : 89201522.3

(22) Date de dépôt : 13.06.89

(54) **Installation de traitement biologique d'un liquide et tambour pour la fixation de micro-organismes équipant une telleinstallation.**

(30) Priorité : 16.06.88 FR 8808209

(43) Date de publication de la demande :
20.12.89 Bulletin 89/51

(45) Mention de la délivrance du brevet :
20.05.92 Bulletin 92/21

(84) Etats contractants désignés :
AT BE CH DE ES FR GB GR IT LI LU NL SE

(56) Documents cités :
FR-A- 2 565 579
PATENT ABSTRACTS OF JAPAN, vol. 6, no.
169 (C-122)[1047], 2 septembre 1982, page 72
C 122; & JP-A-57 84 790 (KEI OOENTAAPU-
RAIZU K.K.) 27-05-1982
PATENT ABSTRACTS OF JAPAN, vol. 6, no.
165 (C-121)[1043], 28 août 1982, page 109 C
121; & JP-A-57 81 885 (KEIOOENTAAPURAIZU
K.K.) 22-05-1982

(56) Documents cités :
PATENT ABSTRACTS OF JAPAN, vol. 4, no. 69
(C-11)[551], 22 mai 1980, page 9 C 11; & JP-
A-55 34 184 (NIPPON SANGYO KIKAIK.K.)
10-03-1980
PATENT ABSTRACTS OF JAPAN, vol. 11, no.
206 (C-433)[2653], 3 juillet 1987, page 125 C
433; & JP-A-62 30 600 (TAKAHIKOITABASHI)
09-02-1987

(73) Titulaire : I.D.E. ENVIRONNEMENT Société à
Résponsabilité Limitée
4 chemin de Pouvourville
F-31400 Toulouse (FR)

(72) Inventeur : Capdeville, Bernard
61 rue Bonnat
F-31400 Toulouse (FR)
Inventeur : Pech, Jean-Louis Résidence La
Catalogne
448 bis avenue de Fronton
F-31200 Toulouse (FR)

(74) Mandataire : Barre, Philippe
Cabinet Barre-Gatti-Laforgue 95 rue des
Amidonniers
F-31069 Toulouse Cédex (FR)

## Description

L'invention concerne une installation de traitement biologique d'un liquide du type comprenant un tambour rotatif disposé dans une cuve et adapté pour assurer la fixation de micro-organismes spécifiques du traitement à réaliser. Elle s'étend à un tambour pour la fixation de micro-organismes adapté pour équiper cette installation.

Les procédés de traitement biologique à l'aide de cultures fixées ont fait l'objet de nombreuses recherches qui ont conduit à la réalisation d'installations de conceptions très variées. Un premier procédé décrit dans le brevet français n° 76.24370, a consisté à suspendre verticalement à l'intérieur d'une cuve une pluralité de fibres en une matière siliceuse dont la surface est recouverte d'une couche de silice colloïdale qui permet de favoriser la croissance des micro-organismes. Selon ce procédé, deux facteurs concourent à garantir un bon niveau de traitement : d'une part, la présence d'une substance bactériophile à la surface des fibres et, d'autre part, la disposition des fibres, suspendues dans la cuve, qui permet à ces dernières de flotter dans le courant de fluide et favorise donc un décrochement de la biomasse en excès par gravité. Toutefois, ce procédé présente l'inconvénient majeur de nécessiter un traitement de surface des fibres qui augmente notablement le coût des installations réalisées. De plus, le fonctionnement de ces installations nécessite des moyens de pompage importants du fait de l'écoulement vertical du liquide.

Pour pallier ces inconvénients, d'autres procédés tels que décrits dans les brevets français n° 84.08976 et n° 82.13438 utilisent une structure de rétention se présentant sous la forme de plusieurs plans parallèles entre lesquels s'écoule le liquide et constitués soit à partir de panneaux réalisés au moyen de fibres minérales sous-tendues par un grillage ou d'un voile en fibres synthétiques, soit d'une toile en fibre de verre ou en matière synthétique repliée en accordéon et dont les plis sont maintenus à distance au moyen d'une ossature porteuse. Chacun de ces plans présente, en outre, une structure maillée permettant d'augmenter l'interface de contact liquide-film de biomasse. Toutefois, dans la pratique, il s'avère que ce réseau maillé se trouve rapidement colmaté en raison même de sa structure croisée qui génère des pontages au niveau des points de contact des brins de ce réseau. Par conséquent, ce procédé aboutit à la réalisation d'une structure de rétention constituée de films plans de micro-organismes entre lesquels s'écoule le liquide, et présentant une surface d'échange plane réduite ne permettant pas un fonctionnement de l'installation dans des conditions optimales. Il est à noter, en outre, qu'il n'est pas envisageable, pour solutionner le problème, de réduire l'espacement entre panneaux, car cette solution entraînerait des risques de pontage entre panneaux voisins et aurait donc un effet néfaste quant aux conditions de fonctionnement.

Un autre procédé, tel que décrit dans les brevets US 4.211.647, DE 2.625.230 et US 4.010.102, utilise une structure de rétention composée de disques gravés en surface et montés parallèlement les uns par rapport aux autres, autour d'un arbre rotatif, le liquide s'écoulant axialement par rapport à cet arbre. Ce procédé présente l'avantage de fournir une surface d'échange relativement importante proportionnelle au nombre de disques utilisés et de permettre un renouvellement continuel de l'interface film de biomasse/liquide grâce à la mise en rotation de ces disques, solution quine pouvait être adoptée pour le procédé décrit précédemment. Toutefois, le principal inconvénient de ce procédé réside dans le prix de revient des installations, en raison du coût de fabrication, d'une part de l'arbre rotatif, et d'autre part des disques gravés en surface.

Enfin, une dernière technique, décrite notamment dans les demandes de brevet japonaises JP 57-84790, JP 57-81885 et JP 55-34184, a consisté à réaliser une installation de traitement biologique comprenant un tambour rotatif comportant un arbre central disposé entre deux flasques et un réseau d'éléments linéaires s'étendant entre les deux flasques sans contact entre eux, et adaptés pour assurer la fixation des micro-organismes sur leur surface extérieure.

Cette solution allie de nombreux avantages qui garantissent sa fiabilité. D'une part, l'utilisation d'un réseau d'éléments linéaires, permet d'obtenir une surface spécifique d'échange très importante sur laquelle la biomasse vient se fixer en formant un manchon autour de chacun desdits éléments. En outre, l'absence de points de contact entre éléments linéaires élimine les risques d'accumulation locale excessive de biomasse, de sorte que la structure reste évidée tridimensionnellement. Le liquide peut ainsi s'écouler librement à l'intérieur du tambour dans des conditions de transfert optimales.

D'autre part, le fait d'entraîner ce tambour en rotation permet un renouvellement continuel de l'interface film de biomasse/liquide, et favorise l'uniformité du dépôt de biomasse sur les différents éléments linéaires. Cette rotation permet également de garantir des performances de traitement uniformes malgré les fluctuations de charges du liquide à traiter.

Toutefois, l'inconvénient de telles installations réside, comme pour les installations utilisant des disques gravés en surface, dans leur prix de revient en raison, d'une part, du coût de fabrication élevé de l'arbre rotatif, et d'autre part, du coût de la mise en oeuvre des éléments linéaires entre les flasques.

La présente invention se propose de pallier cet inconvénient et a pour objectif essentiel de fournir une installation du type décrit ci-dessus, alliant les avantages de cette dernière et présentant en outre un faible coût de revient.

A cet effet, l'invention vise une installation de traitement biologique d'un liquide, du type comprenant :

– une cuve dotée de moyens d'alimentation en liquide et de moyens d'évacuation après traitement,

– au moins un tambour rotatif disposé dans ladite cuve et adapté pour assurer la fixation de micro-organismes spécifiques du traitement à réaliser, chaque tambour comportant un réseau formé d'une multitude d'éléments linéaires tendus, maintenus à proximité les uns des autres, sans contact entre eux, selon des directions approximativement parallèles, chaque élément linéaire étant adapté pour assurer la fixation des micro-organismes sur sa surface extérieure,

– et des moyens d'entraînement en rotation dudit tambour.

Selon l'invention, cette invention se caractérise en ce que chaque tambour est constitué d'une pluralité de cadres de même longueur disposés parallèlement les uns par rapport aux autres et portés vers chacune de leur extrémité par un élément d'about, le réseau étant formé d'une multitude de cordes maintenues longitudinalement sur chacun desdits cadres.

Cette installation comporte donc un tambour réalisé à partir d'éléments modulaires et présentant par conséquent un faible prix de revient. En outre, ce tambour, de par sa conception, ne nécessite pas d'arbre central en vue de sa mise en rotation, et son prix de revient s'en trouve notablement diminué.

Par ailleurs, selon un mode de réalisation préférentiel, le réseau d'éléments linéaires est formé d'une multitude de cordes enroulées longitudinalement autour des cadres. La mise en oeuvre de cet enroulement de cordes peut ainsi être automatisé de façon à abaisser les coûts de fabrication et à augmenter les cadences de production.

Chaque tambour comprend, en outre, préférentiellement des séries de cadres de largeurs différentes, disposés de façon à conférer audit tambour une section transversale décroissant par paliers du centre dudit tambour vers sa périphérie. Cette caractéristique permet en effet de conférer à ce tambour une forme pseudo-cylindrique facilitant sa mise en rotation.

L'invention s'étend, en tant que moyen essentiel pour la réalisation de l'installation de traitement, à un tambour pour la fixation de micro-organismes en vue d'un traitement biologique, du type comprenant un réseau formé d'une multitude d'éléments linéaires tendus, maintenus à proximité les uns des autres, sans contact entre eux, selon des directions approximativement parallèles, chaque élément linéaire étant adapté pour permettre la fixation des micro-organismes sur sa surface extérieure, ledit tambour étant caractérisé en ce qu'il est constitué d'une pluralité de cadres de même longueur disposés parallèlement les uns par rapport aux autres et portés vers chacune de leur extrémité par un élément d'about, le réseau étant formé d'une multitude de cordes maintenues longitudinalement sur chacun desdits cadres.

D'autres caractéristiques et avantages de l'invention ressortiront de la description détaillée qui suit en référence aux dessins annexés qui en présentent, à titre d'exemples non limitatifs, deux modes de réalisation préférentiels et une variante de réalisation. Sur ces dessins qui font partie intégrante de la présente description :

– la figure 1 est une vue en perspective, avec une partie de la paroi de la cuve arrachée, d'un premier mode de réalisation d'une installation de traitement conforme à l'invention,

– la figure 2 en est une coupe longitudinale par un plan vertical AA,

– la figure 3 en est une coupe transversale par un plan vertical BB,

– la figure 4 est une vue en perspective, avec une partie de la paroi de la cuve arrachée, d'un deuxième mode de réalisation d'une installation conforme à l'invention,

– la figure 5 en est une coupe longitudinale par un plan vertical CC,

– la figure 6 en est une coupe transversale par un plan vertical DD,

– la figure 7 est une vue en perspective partielle d'un cadre de tambour de ces installations,

– la figure 8 est une vue de dessus schématique d'une variante d'installation de traitement conforme à l'invention,

– la figure 9 est une coupe schématique transversale par un plan vertical EE de cette variante.

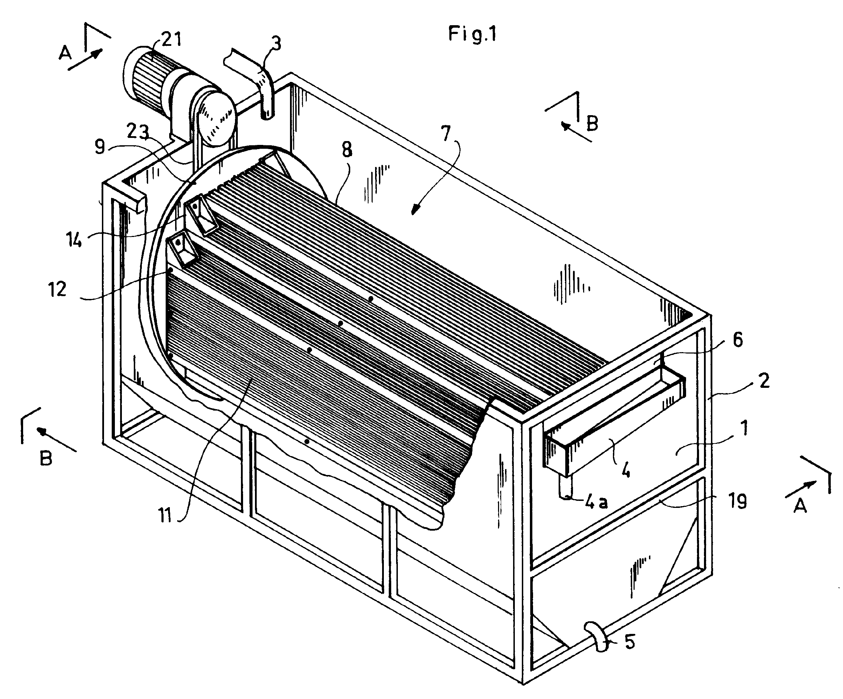

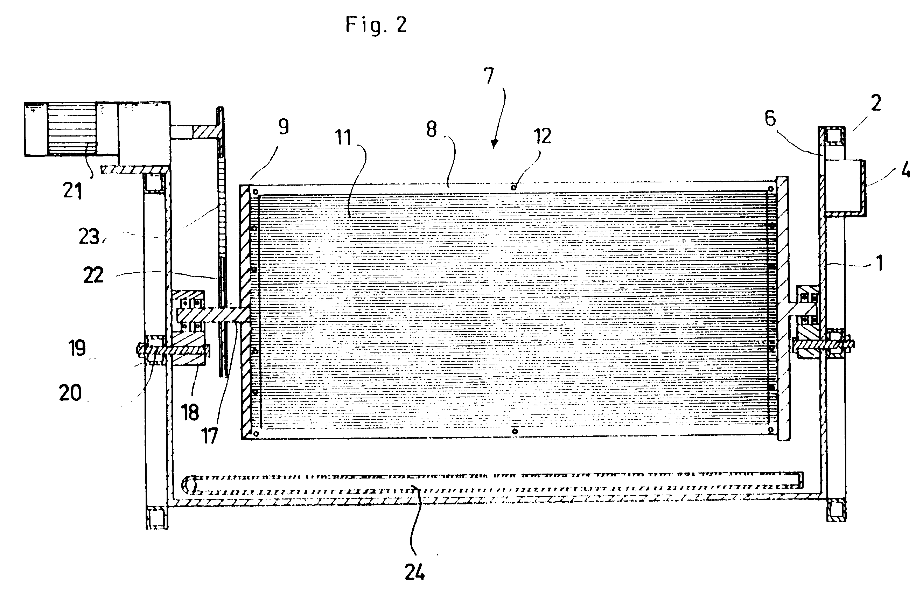

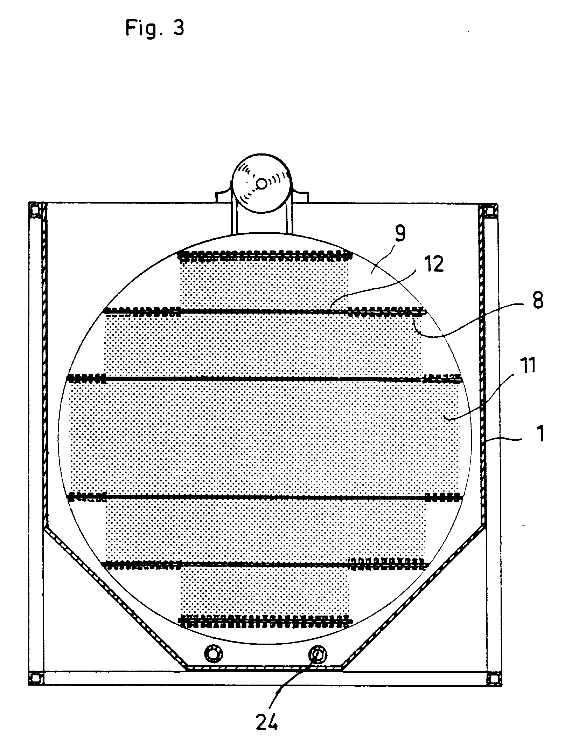

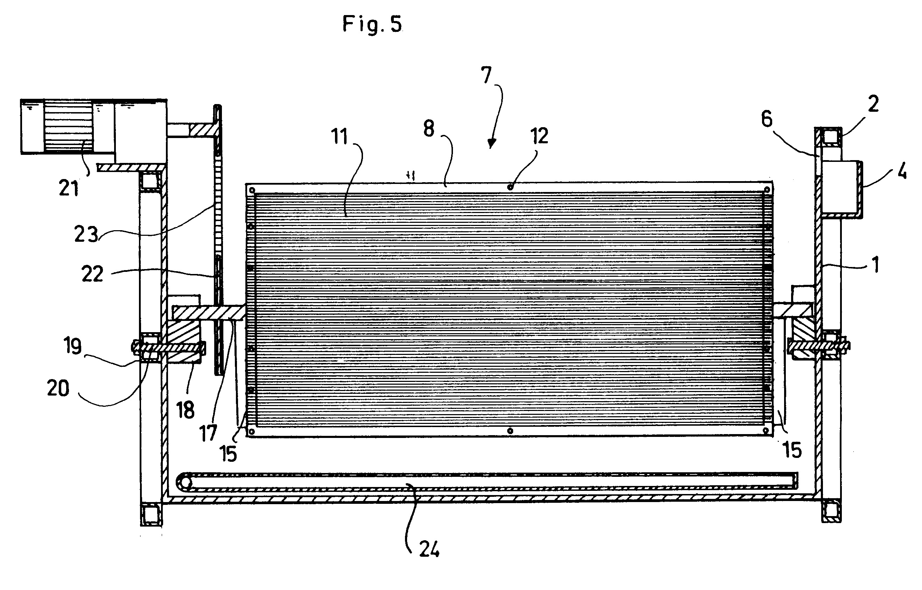

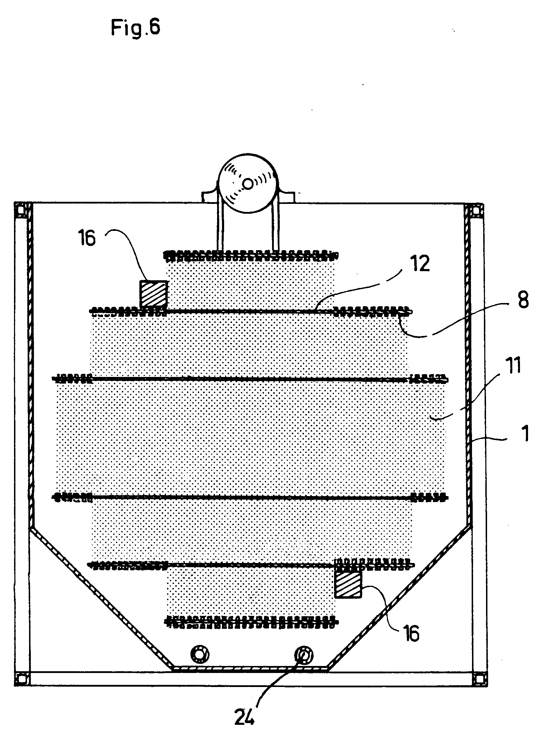

Les installations représentées aux figures 1 à 6 sont destinées au traitement biologique d'un liquide.

Elles comprennent une cuve 1, supportée par un châssis 2 de forme parallélépipédique rectangle, en profilés métalliques, doté d'une embase d'appui au sol. Cette cuve 1 présente une section transversale comportant une partie supérieure de forme rectangulaire et une partie inférieure de forme trapézoïdale inversée dont la petite base repose sur le sol.

Cette cuve 1 est en outre dotée vers une de ses extrémités d'un conduit 3 d'amenée de liquide, et vers son extrémité opposée, d'une goulotte d'évacuation 4 adaptée pour canaliser le fluide traité vers un conduit d'évacuation 4a. Cette goulotte 4 communique avec l'intérieur de la cuve 1 par une lumière 6 ménagée en partie supérieure d'une paroi latérale de cette dernière. La cuve 1 comporte enfin un robinet de vidange 5 disposé en partie basse d'une paroi latérale de cette dernière.

Cette cuve 1 renferme un tambour 7 rotatif composé d'une pluralité de cadres rectangulaires 8 disposés parallèlement les uns par rapport aux autres et portés vers chacune de leurs extrémités par un élément d'about 9 ou 15. Chacun de ces cadres 8 est fabriqué par moulage d'une matière composite à base de résine de polyester et de fibres de verre.

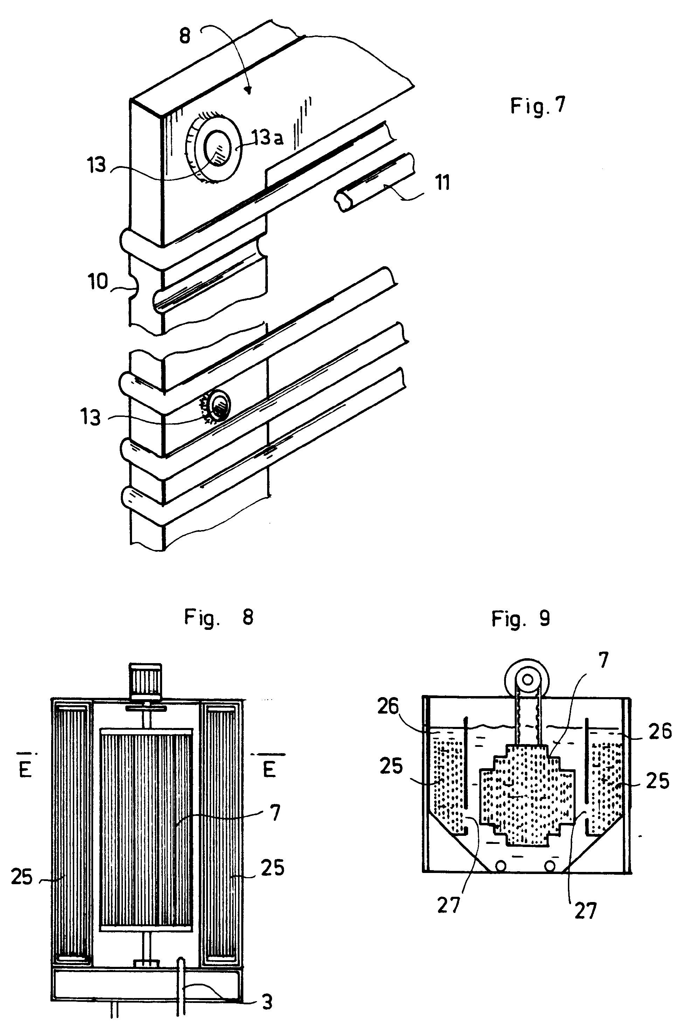

Tels que représentés à la figure 7, les petits côtés de ces cadres 8 sont moulés de façon à présenter sur chaque face une série d'encoches transversales 10 destinées à loger une corde 11 enroulée longitudinalement autour du cadre 8. Chacune de ces cordes 11 présente un état de surface macrorugueux en vue de favoriser la fixation de la biomasse, et est réalisée en un matériau de la famille des polyoléfines. Cet état de surface macrorugueux est en outre obtenu en confectionnant chaque corde 11 au moyen de brins élémentaires torsadés.

Par ailleurs, les cadres 8 du tambour 7 ne sont pas tous d'un format identique. En l'exemple représenté aux figures, le tambour 7 est constitué de trois séries de cadres 8 de largeurs différentes disposés de façon à conférer à ce tambour 7 une forme pseudo-cylindrique.

Le maintien des cadres 8 les uns par rapport aux autres est assuré par des tirants 12 venant se loger dans des orifices 13 ménagés sur les côtés des cadres, et maintenus sur les deux cadres d'extrémité au moyen de boulons. En outre, des bossages 13a ménagés sur la périphérie des orifices 13 forment des entretoises permettant de maintenir les cadres 8 à distance les uns des autres.

Selon un premier mode de réalisation représenté aux figures 1 à 3, le tambour 7 ainsi formé est porté par des flasques circulaires 9 au moyen de sabots 14 vissés sur ces flasques et disposés de façon à venir se loger dans les décrochements délimités par deux séries de cadres 8 de largeurs différentes.

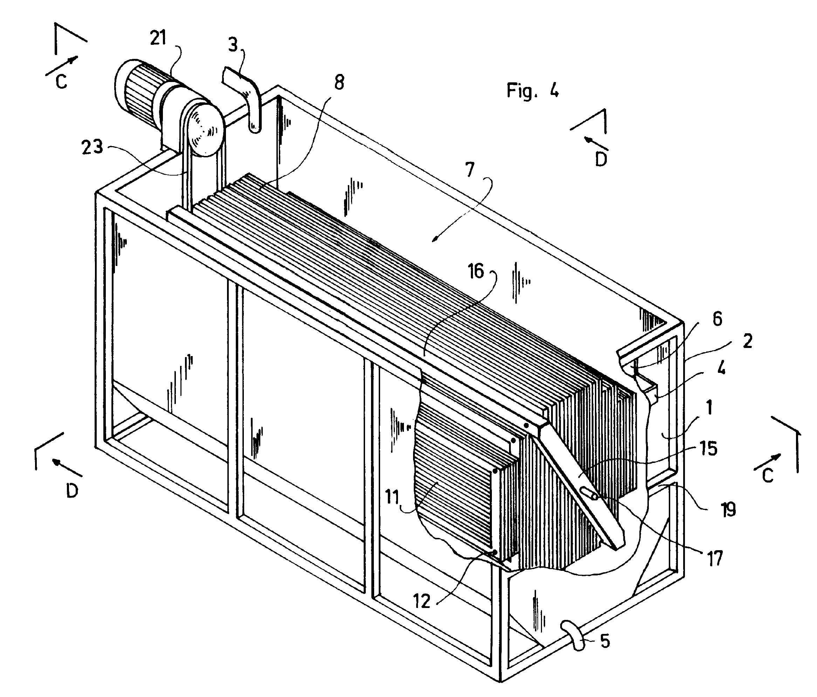

Selon un deuxième mode de réalisation représenté aux figures 4 à 6, le tambour 7 est porté par deux montants 15 disposés en diagonale chacun contre une face d'extrémité des cadres 8, et reliés vers chacune de leurs extrémités par une traverse longitudinale 16 logée dans un décrochement délimité par deux séries de cadres 8 de largeurs différentes, de façon à former avec les montants 15 une ceinture-support desdits cadres.

La liaison entre le tambour 7 et la cuve 1 est quant à elle réalisée au moyen d'un arbre 17 porté par la face d'un flasque 9 ou d'un montant 15 opposée au tambour 7, ledit arbre venant se loger dans un palier 18 fixé sur un profilé de renfort 19 externe à la cuve, au moyen de boulons 20.

Ce tambour 7 est enfin entraîné en rotation au moyen d'un moteur d'entraînement 21 porté en partie supérieure d'une paroi latérale de la cuve 1, à l'aplomb de l'arbre 17, et relié à une roue dentée 22 portée par cet arbre 17, par l'intermédiaire d'une chaîne de transmission 23.

En dernier lieu, et pour des traitements en aérobie, la cuve 1 est dotée de moyens d'aération composés de buses 24 de soufflage disposées dans le fond de cette cuve et alimentées en air au moyen d'un groupe de production d'air (non représenté) de type connu en soi.

Ces installations d'un faible coût de revient offrent l'avantage de présenter une importante surface d'échange en raison du nombre de cordes 11, sans risque de colmatage. Elles autorisent en outre une excellente répartition du liquide à traiter et de l'air de bullage entre les différentes cordes et garantissent donc un traitement homogène et un transfert optimal.

Selon les figures 8 et 9, cette installation peut comporter à l'intérieur de la cuve 1 ci-dessus décrite, deux éléments filtrants 25 disposés dans des compartiments latéraux 26 ménagés de part et d'autre du tambour rotatif 7 et communiquant avec le volume central de la cuve 1 par l'intermédiaire de lumières 27 ménagées en partie basse de ces compartiments, à l'opposé du conduit d'amenée de liquide 3.

Chacun de ces éléments filtrants 25 est constitué d'un tambour fixe composé de cadres similaires à ceux du tambour rotatif 7 décrit ci-avant, mais présentant tous une même largeur. Ces éléments filtrants ont pour but de permettre la rétention des micro-organismes en suspension en vue d'une séparation micro-organismes - liquide.

## Revendications

1. Installation de traitement biologique d'un liquide, du type comprenant :
   – une cuve (1) dotée de moyens d'alimentation (3) en liquide et de moyens d'évacuation (4, 6) après traitement,
   – au moins un tambour (7) rotatif disposé dans ladite cuve et adapté pour assurer la fixation de micro-organismes spécifiques du traitement à réaliser, chaque tambour (7) comportant un réseau formé d'une multitude d'éléments linéaires (11) tendus, maintenus à proximité les uns des autres, sans contact entre eux, selon des directions approximativement parallèles, chaque élément linéaire (11) étant adapté pour assurer la fixation des micro-organismes sur sa surface extérieure.
   – et des moyens d'entraînement en rotation (21, 22, 23) dudit tambour,
ladite installation étant caractérisée en ce que chaque tambour (7) est constitué d'une pluralité de cadres (8) de même longueur disposés parallèlement les uns par rapport aux autres et portés vers chacune de leur extrémité par un élément d'about (9 ; 15), le réseau étant formé d'une multitude de cordes (11) maintenues longitudinalement sur chacun desdits cadres.

2. Installation de traitement selon la revendication 1, caractérisée en ce que le réseau d'éléments linéaires est constitué d'une multitude de cordes (11) enroulées autour de chacun des cadres (8).

3. Installation de traitement selon l'une des revendications 1 ou 2, caractérisée en ce que le tambour (7) comprend des séries de cadres (8) de largeurs différentes, disposés de façon à conférer audit tambour une section transversale décroissant par paliers du centre dudit tambour vers sa périphérie.

4. Installation selon l'une des revendications 1, 2 ou 3, caractérisée en ce que les cadres (8) sont solidarisés entre eux et maintenus à distance au moyen de tirants transversaux (12) traversant lesdits cadres, et d'entretoises (13a) intercalées entre ces cadres.

5. Installation selon la revendication 3, caractérisée en ce que les éléments d'about sont constitués de flasques (9) sur lesquels les cadres sont maintenus au moyen de sabots (14) fixés sur lesdits flasques et agencés de façon à se loger dans les décrochements délimités par deux séries de cadres (8) de largeurs différentes.

6. Installation selon la revendication 3, caractérisée en ce que les éléments d'about sont constitués de deux montants (15) disposés en diagonale, chacun contre une face d'extrémité des cadres (8), et reliés entre eux, vers chacune de leur extrémité, par une traverse longitudinale (16) logée dans un décrochement délimité par deux séries de cadres (8) de largeurs différentes de façon à former avec les montants (15) une ceinture-support desdits cadres.

7. Installation de traitement selon l'une des revendications précédentes, dans laquelle chaque élément d'about (9 ; 15) comprend, côté externe au tambour (7), un arbre (17) logé dans un palier (18) porté par la cuve (1), les moyens d'entraînement en rotation du tambour (7) comportant un moteur d'entraînement en rotation (21), une roue dentée (22) portée par l'arbre (17) d'un des éléments d'about (9 ; 15) et une chaîne de transmission (23) reliant lesdits moteur et roue dentée.

8. Installation selon l'une des revendications précédentes pour un traitement biologique en aérobie comprenant des moyens d'aération (24) adaptés pour insuffler de l'air à l'intérieur de la cuve (1).

9. Installation de traitement selon l'une des revendications précédentes, dans laquelle chaque corde (11) présente un état de surface macrorugueux.

10. Installation selon la revendication 9, caractérisée en ce que chaque corde (11) est réalisée en un matériau de la famille des polyoléfines.

11. Installation de traitement selon l'une des revendications 9 ou 10, dans laquelle chaque corde (11) est constituée d'une pluralité de brins torsadés conférant à cette dernière son état de surface macrorugueux.

12. Installation de traitement selon l'une des revendications précédentes, caractérisée en ce qu'elle comprend au moins un tambour (7) rotatif et au moins un tambour (7) fixe permettant la rétention des micro-organismes en suspension en vue d'une séparation micro-organismes - liquide.

13. Tambour pour la fixation de micro-organismes en vue d'un traitement biologique, du type comprenant un réseau formé d'une multitude d'éléments linéaires (11) tendus, maintenus à proximité les uns des autres, sans contact entre eux, selon des directions approximativement parallèles, chaque élément linéaire (11) étant adapté pour permettre la fixation des micro-organismes sur sa surface extérieure, ledit tambour étant caractérisé en ce qu'il est constitué d'une pluralité de cadres (8) de même longueur disposés parallèlement les uns par rapport aux autres et portés vers chacune de leur extrémité par un élément d'about (9 ; 15), le réseau étant formé d'une multitude de cordes (11) maintenues longitudinalement sur chacun desdits cadres.

14. Tambour selon la revendication 13, caractérisé en ce que le réseau d'éléments linéaires est constitué d'une multitude de cordes (11) enroulées autour de chacun des cadres (8).

15. Tambour selon l'une des revendications 13 ou 14, caractérisé en ce qu'il comprend des séries de cadres (8) de largeurs différentes, disposés de façon à conférer audit tambour une section transversale décroissant par paliers du centre dudit tambour vers sa périphérie.

16. Tambour selon l'une des revendications 13, 14 ou 15, caractérisé en ce que les cadres (8) sont solidarisés entre eux et maintenus à distance au moyen de tirants transversaux (12) traversant lesdits cadres et d'entretoises (13a) intercalées entre ces cadres.

17. Tambour selon la revendication 15, caractérisé en ce que les éléments d'about sont constitués de flasques (9) sur lesquels les cadres sont maintenus au moyen de sabots (14) fixés sur lesdits flasques et agencés de façon à se loger dans les décrochements délimités par deux séries de cadres (8) de largeurs différentes.

18. Tambour selon la revendication 15, caractérisé en ce que les éléments d'about sont constitués de deux montants (15) disposés en diagonale, chacun contre une face d'extrémité des cadres (8), et reliés entre eux, vers chacune de leur extrémité, par une traverse longitudinale (16) logée dans un décrochement délimité par deux séries de cadres (8) de largeurs différentes de façon à former avec les montants (15) une ceinture-support desdits cadres.

19. Tambour selon l'une des revendications 13 à 18, caractérisé en ce que chaque corde (11) présente un état de surface macrorugueux.

20. Tambour selon la revendication 19, caractérisé en ce que chaque corde est réalisée en un matériau de la famille des polyoléfines.

21. Tambour selon l'une des revendications 19 ou 20, caractérisé en ce que chaque corde (11) est constituée d'une pluralité de brins torsadés conférant à cette dernière son état de surface macrorugueux.

**Patentansprüche**

1. Anlage zur biologischen Behandlung einer Flüssigkeit, und zwar der Art, die die folgenden Teile umfaßt:
– einen mit Flüssigkeitszufuhrmitteln (3) und Mitteln (4, 6) zur Entleerung nach Behandlung versehenen Behälter (1),
– mindestens eine Drehtrommel (7), die in dem besagten Behälter angeordnet und so beschaffen ist, daß sie die Fixierung von im Zusammenhang mit der durchzuführenden Behandlung spezifischen Mikroorganismen gewährleistet, wobei jede Trommel (7) ein in einer Vielzahl gespannter linearer Elemente (11) bestehendes Netzwerk umfaßt, und zwar werden die besagten linearen Elemente in annähernd parallelen Richtungen nahe aneinander gehalten, ohne miteinander in Berührung zu kommen, während jedes lineare Element (11) so beschaffen ist, daß es die Fixierung von Mikroorganismen an seiner Außenfläche gewährleistet,
– und Mittel (21, 22, 23) zum drehenden Antrieb der besagten Trommel,
wobei die besagte Anlage dadurch gekennzeichnet ist, daß jede Trommel (7) in einer Mehrzahl von gleich langen Rahmen (8) besteht, die parallel im Verhältnis zueinander angeordnet und an jedem ihrer Enden durch ein Endelement (9; 15) abgestützt sind, wobei sich das Netzwerk aus einer Vielzahl von Strängen (11) zusammensetzt, die der Länge nach an jedem der besagten Rahmen befestigt sind.

2. Anlage zur Behandlung nach Anspruch 1, dadurch gekennzeichnet, daß das Netzwerk von linearen Elementen in einer Vielzahl von Strängen (11) besteht, die um jeden der Rahmen (8) gewickelt sind.

3. Anlage zur Behandlung nach einem der Ansprüche 1 oder 2, dadurch gekennzeichnet, daß die Trommel (7) Reihen von Rahmen (8) unterschiedlicher Breiten umfaßt, die so angeordnet sind, daß sie der besagten Trommel einen stufenweise von der Mitte der besagten Trommel zu deren Umfang abnehmenden Querschnitt vermitteln.

4. Anlage nach einem der Ansprüche 1, 2 oder 3, dadurch gekennzeichnet, daß die Rahmen (8) fest miteinander verbunden sind und mit Hilfe von quer verlaufenden Zugstangen (12), die durch die besagten Rahmen hindurchführen, sowie von zwischen diesen Rahmen angeordneten Abstandstücken (13a) im Abstand voneinander gehalten werden.

5. Anlage nach Anspruch 3, dadurch gekennzeichnet, daß die Endelemente in Seitenplatten (9) bestehen, an denen die Rahmen mit Hilfe von Haltern (14) befestigt sind, wobei die besagten Halter an den besagten Seltenplatten befestigt und so angeordnet sind, daß sie in den durch zwei Reihen von Rahmen (8) unterschielicher Breiten abgegrenzten Freiräumen sitzen.

6. Anlage nach Anspruch 3, dadurch gekennzeichnet, daß die Endelemente in zwei Pfosten (15) bestehen, die schräg und jeweils an einer Endfläche der Rahmen (8) angeordnet und an jedem ihrer Enden durch einen längs verlaufenden Querstab (16) miteinander verbunden sind, wobei der besagte Querstab in einem durch zwei Reihen von Rahmen (8) unterschiedlicher Breite abgegrenzten Freiraum sitzt, so daß gemeinsam mit den Pfosten (15) eine abstützende Umfassung der besagten Rahmen gebildet wird.

7. Anlage zur Behandlung nach einem der vorstehenden Ansprüche, bei der jedes Endelement (9; 15) außerhalb der Trommel (7) eine in einem durch den Behälter (1) abgestützten Lager (18) angeordnete Welle (17) umfaßt, wobei die Mittel zu drehendem Antrieb der Trommel (7) einen Drehantriebsmotor (21), ein durch die Welle (17) eines der Endelemente (9; 15) abgestütztes Zahnrad (22) und eine den besagten Motor mit dem besagten Zahnrad verbindende Übertragungskette (23) umfassen.

8. Anlage nach einem der vorstehenden Ansprüche zu aeroboer biologischer Behandlung, umfassend Belüftungsmittel (24), die so beschaffen sind, daß sie Luft in das Innere des Behälters (1) einblasen.

9. Anlage zur Behandlung nach einem der vorstehenden Ansprüche, bei der jeder Strang (11) einen hochgradig rauhen Oberflächenzustand aufweist.

10. Anlage nach Anspruch 9, dadurch gekennzeichnet, daß jeder Strang (11) aus einem Werkstoff der Gruppe Polyolefine besteht.

11. Anlage zur Behandlung nach einem der Ansprüche 9 oder 10, bei der jeder Strang (11) aus einer Vielzahl verdrillter Fäden besteht, die dem besagten Strang seinen hochgradig rauhen Oberflächenzustand vermitteln.

12. Anlage zur Behandlung nach einem der vorstehenden Ansprüche, dadurch gekennzeichnet, daß sie mindestens eine Drehtrommel (7) und mindestens eine fest angeordnete Trommel (7) umfaßt, die Retention von in Suspension befindlichen Mikroorganismen zwecks Trennung der Mikroorganismen von der Flüssigkeit gestattet.

13. Trommel zum Fixieren von Mikroorganismen zwecks biologischer Behandlung, und zwar der Art mit einem in einer Vielzahl gespannter linearer Elemente (11) bestehenden Netzwerk, wobei die besagten linearen Elemente in annähernd parallelen Richtungen nahe aneinander gehalten werden, ohne miteinander in Berührung zu kommen, wobei jedes lineare Element (11) so beschaffen ist, daß es die Fixierung von Mikroorganismen an seiner Außenfläche gewährleistet, und zwar ist die besagte Trommel dadurch gekennzeichnet, daß sie in einer Mehrzahl von gleich langen Rahmen (8), die parallel im Verhältnis zueinander angeordnet und an jedem ihrer Enden durch ein Endelement (9; 15) abgestützt sind, besteht, wobei sich das Netzwerk aus einer Vielzahl von Strängen (11) zusammensetzt, die der Länge nach an jedem der besagten Rahmen befestigt sind.

14. Trommel nach Anspruch 13, dadurch gekennzeichnet, daß das Netzwerk von linearen Elementen in einer Vielzahl von Strängen (11) besteht, die um jeden der Rahmen (8) gewickelt sind.

15. Trommel nach einem der Ansprüche 13 oder 14, dadurch gekennzeichnet, daß die Trommel (7) Reihen von Rahmen (8) unterschiedlicher Breiten umfaßt, die so angeordnet sind, daß sie der besagten Trommel einen stufenweise von der Mitte der besagten Trommel zu deren Umfang abnehmenden Querschnitt vermitteln.

16. Trommel nach einem der Ansprüche 13, 14 oder 15, dadurch gekennzeichnet, daß die Rahmen (8) fest miteinander verbunden sind und mit Hilfe von quer verlaufenden Zugstangen (12), die durch die besagten Rahmen hindurchführen, sowie von zwischen diesen Rahmen angeordneten Abstandstücken (13a) im Abstand voneinander gehalten werden.

17. Trommel nach Anspruch 15, dadurch gekennzeichnet, daß die Endelemente in Seitenplatten (9) bestehen, an denen die Rahmen mit Hilfe von Haltern (14) befestigt sind, wobei die besagten Halter an den besagten Seitenplatten befestigt und so angeordnet sind, daß sie in den durch zwei Reihen von Rahmen (8) unterschiedlicher Breiten abgegrenzten Freiräumen sitzen.

18. Trommel nach Anspruch 15, dadurch gekennzeichnet, daß die Endelemente in zwei Pfosten (15) bestehen, die schräg und jeweils an einer Endfläche der Rahmen (8) angeordnet und an jedem ihrer Enden durch einen längs verlaufenden Querstab (16) miteinander verbunden sind, wobei der besagte Querstab in einem durch zwei Reihen von Rahmen (8) unterschiedlicher Breiten abgegrenzten Freiraum sitzt, so daß gemeinsam mit den Pfosten (15) eine abstützende Umfassung der besagten Rahmen gebildet wird.

19. Trommel nach einem der Ansprüche 13 bis 18, dadurch gekennzeichnet, daß jeder Strang (11) einen hochgradig rauhen Oberflächenzustand aufweist.

20. Trommel nach Anspruch 19, dadurch gekennzeichnet, daß jeder Strang (11) aus einem Werkstoff der Gruppe Polyolefine besteht.

21. Trommel nach einem der Ansprüche 19 oder 20, dadurch gekennzeichnet, daß jeder Strang (11) aus einer Vielzahl verdrillter Fäden besteht, die dem besagten Strang seinen hochgradig rauhen Oberflächenzustand vermitteln.

## Claims

1. Installation for the biological treatment of a liquid, of the type comprising :

– a tank (1) endowed with liquid-supply means (3) and means for evacuation (4, 6) after treatment,
– at least one rotary drum (7) arranged within said tank and so designed as to ensure fixation of micro-organisms specific to the treatment to be carried out, each drum (7) comprising a network consisting in a multitude of stretched linear elements (11), held in approximately parallel directions close to one another without any contact between them, each linear element (11) being so designed as to ensure fixing of micro-organisms on its outer surface,
– as well as rotary driving means (21, 22, 23) for said drum,

said installation being characterised in that each drum (7) is constituted by a plurality of frames (8) of identical length arranged parallel in relation to one another and supported at each end by an end element (9; 15), said network consisting of a multitude of cords (11) held longitudinally on each of said frames.

2. Installation for treatment according to claim 1, characterised in that the network of linear elements is constituted by a multitude of cords (11) wound about each of frames (8).

3. Installation for treatment according to one of claims 1 or 2, characterised in that drum (7) comprises series of frames (8) of different widths arranged in such a manner as to confer to said drum a cross-section decreasing in degrees from the centre of said drum to its periphery.

4. Installation according to one of claims 1, 2 or 3, characterised in that frames (8) are firmly connected among themselves and held at a distance by means of transverse tie rods (12) passing through said frames and spacers (13a) interposed between said frames.

5. Installation according to claim 3, characterised in that the end elements are constituted by side-plates (9) on which the frames are held by means of brackets (14) attached to said side-plates and so designed as to locate within the recesses delimited by two series of frames (8) of different widths.

6. Installation according to claim 3, characterised in that the end elements are constituted by two posts (15) arranged diagonally, each against one end face of frames (8), and connected with each other, at each of their ends, by longitudinal transverse bar (16) located within a recess delimited by two series of frames (8) of different widths so as to form, together with posts (15), a support-surround of said frames.

7. Installation for treatment according to one of the preceding claims, in which each end element (9; 15) comprises, outside drum (7), a shaft (17) resting within a bearing (18) supported by tank (1), whereby the means for rotary driving of drum (7) comprise a rotary-drive motor (21), a toothed wheel (22) supported by shaft (17) of one of the end elements (9; 15) and a transmission chain (23) connecting said motor with said toothed wheel.

8. Installation according to one of the preceding claims for aerobic biological treatment comprising air-supply means (24) so designed as to blow air inside tank (1).

9. Installation for treatment according to one of the preceding claims in which each cord (11) presents an extremely rough surface state.

10. Installation according to claim 9, characterised in that each cord (11) is made from a material of the polyolefine group.

11. Installation for treatment according to one of claims 9 or 10, in which each cord (11) is constituted by a plurality of twisted strands conferring to the latter its extremely rough surface state.

12. Installation for treatment according to one of the preceding claims, characterised in that it comprises at least one rotary drum (7) and at least one fixed drum (7) making it possible to keep micro-organisms in suspension with a view to bringing about a separation between micro-organisms and liquid.

13. Drum for fixing micro-organisms with a view to biological treatment, of the type comprising a network formed by a multitude of stretched linear elements (11), held in approximately parallel directions close to one another without any contact between them, each linear element (11) being so designed as to ensure fixing of micro-organisms on its outer surface, said drum being characterised in that it is constituted by a plurality of frames (8) of identical length arranged parallel in relation to one another and supported at each end by an end element (9; 15), said network consisting of a multitude of cords (11) held longitudinally on each of said frames.

14. Drum according to claim 13, characterised in that the network of linear elements is constituted by a multitude of cords (11) wound about each of frames (8).

15. Drum according to one of claims 13 or 14, characterised in that drum (7) comprises a series of frames (8) of different widths arranged in such a manner as to confer to said drum a cross-section decreasing in degrees from the centre of said drum to its periphery.

16. Drum according to one of claims 13, 14 or 15, characterised in that frames (8) are firmly connected among themselves and held at a distance by means of transverse tie rods (12) passing through said frames and spacers (13a) interposed between said frames.

17. Drum according to claim 15, characterised in that the end elements are constituted by side-plates (9) on which the frames are held by means of brackets (14) attached to said side-plates and so designed as to locate within the recesses delimited by two series of frames (8) of different widths.

18. Drum according to claim 15, characterised in that the end elements are constituted by two posts (15) arranged diagonally, each against one end face of frames (8), and connected with each other, at each of their ends, by longitudinal transverse bar (16) located within a recess delimited by two series of frames (8) of different widths so as to form, together with posts (15), a support-surround of said frames.

19. Drum according to one of claims 13 to 18, characterised in that each cord (11) presents an extremely rough surface state.

20. Drum according to claim 19, characterised in that each cord (11) is made from a material of the polyolefine group.

21. Drum according to one of claims 19 or 20, characterised in that each cord (11) is constituted by a plurality of twisted strands conferring to the latter its extremely rough surface state.

Fig.1

## Fig. 2

EP 0 346 990 B1

Fig. 3

Fig. 4

EP 0 346 990 B1

Fig. 5

Fig.6

Fig. 7

8

13a

13

11

10

13

Fig. 8

E

E

7

25

25

3

Fig. 9

26

7

26

25

25

27

27

15